(19) Europäisches Patentamt
European Patent Office
Office européen des brevets

(11) EP 1 619 839 A1

(12) EUROPEAN PATENT APPLICATION

(43) Date of publication:
**25.01.2006 Bulletin 2006/04**

(51) Int Cl.:
***H04L 12/56*** *(2006.01)*

(21) Application number: **04425546.1**

(22) Date of filing: **21.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Siemens Mobile Communications S.p.A.**
**20126 Milano (IT)**

(72) Inventors:
- **Masseroni, Carlo**
  **20017 Rho (MI) (IT)**
- **Trivisonno, Riccardo**
  **20146 Milano (IT)**
- **Liroli, Francesco**
  **22079 Villa Guardia (CO) (IT)**

(74) Representative: **Giustini, Delio**
**Siemens Mobile Communications S.p.A.**
**Postfach 22 16 34**
**80506 München (DE)**

# (54) Method of and apparatus for scheduling transmission of multimedia streaming services over the radio channel of wireless communication systems

(57) The method and the apparatus schedule transmission of multimedia streaming services over the radio channel of wireless communication systems based on the importance or rank of the data contained in each packet transmitted by a service provider (ISP) to the wireless system (1). A gateway (SGSN) between a wired and a wireless part of the system (1) comprises snooping and marking means (7) reading, from each packet arriving at said gateway (SGSN), an information related to the rank of the data contained in each packet and marking each data unit formed from a packet with said information (F). Critical condition detecting means (8) and data unit discarding means (9), located in a radio resource manager (BSC, 5) and arranged to cooperate with said buffer (4) and with each other to detect the existence of critical conditions of the radio channel preventing the attainment of a given quality-of-service level and consequently to selectively drop data units from the buffer based on said marking and to cause allocation of radio resources to the remaining data units.

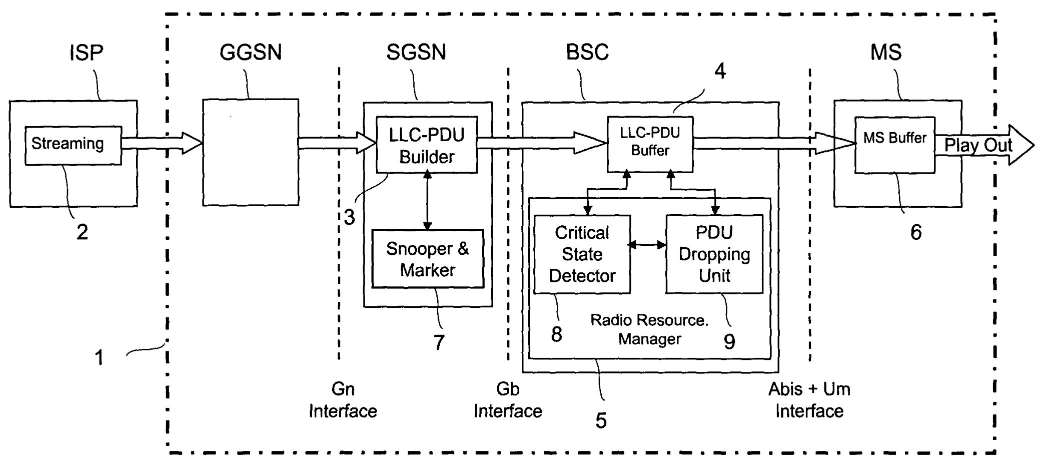


**Fig. 1**

EP 1 619 839 A1

## Description

### Field of the invention

The present invention generally refers to multimedia services in radio communication systems, and more particularly it concerns a method of and an apparatus scheduling transmission of the packet communication related to a multimedia streaming service over the radio channel of a wireless communication system.

Preferably, the invention is applied in GPRS (General Packet Radio Service) or EDGE (Enhanced Data rate for GSM Evolution)/GPRS (or EGPRS, Enhanced GPRS) systems.

### Background of the invention

Multimedia streaming services are appealing services for users of modern communications systems, and also operators of enhanced 2nd generation cellular systems, like GPRS or EGPRS, aim at offering such services to their customers.

When offering such services over a wireless or mobile communication system, the problem arises of providing enough radio resources (i.e. bandwidth on the radio interface) to deliver real time multimedia contents. The multimedia streams, and particularly the video component thereof, have high bit rate and high and unpredictable variability in the bandwidth requirements. On the other hand, also the available bandwidth on the radio interface suffers from a high and unpredictable variability, wholly uncorrelated with the multimedia stream variability. For reasons of costs and efficiency of resource exploitation, equipping a wireless communication system with radio resources capable of meeting the peak requirements of the multimedia services is unconceivable. Thus, an efficient radio resource management policy is to be studied allowing a good trade-off among the demand and the offer of radio resources.

A first approach for solving that problem is scheduling the transmission of the packets related to the multimedia service (hereinafter referred to as "multimedia packets") based on an evaluation of the channel conditions, so as to avoid transmitting the multimedia packets under bad channel conditions. Such approach is disclosed for instance in the paper "Channel-Aware Schedulers for VOIP and MPEG-4 for Wireless Communications", presented by A.C. Costa Aguiar et al. at the 8th International Workshop on Mobile Multimedia Communications (MOMuC'03), October 5 - 8, 2003, Munich (Germany).

A second approach is scheduling the transmission based on the characteristics of the video flow. Algorithms based on that approach, commonly referred to as "semantic-aware" algorithms, look at the kind of the video packets to be forwarded to the radio interface and, in case of bad channel conditions or of limited resource availability, concentrate on important packets, neglecting less important ones, instead of attempting to forward all packets. The invention is based on that second approach.

To explain the concept of "more important" and "less important" packets, we consider by way of example multimedia streams organised according to the so-called MPEG-4 standard (ISO/IEC standard 14496). Only the video component is considered, since the bandwidth requirements for the audio component are far lower than those of the video component and generally do not cause problems for radio resource management.

In MPEG-4, three kinds of coded video frames (Video Object Planes, or VOPs) are envisaged: I-frames (intra-coded frames), which are image frames independently coded; P-Frames (predicted frames), in which only the parts of the images that have been changed between a frame and the previous one are coded; and B-frames (bi-directional predicted frames), which are images coded using motion compensation on previous and/or next I- or P-frames. An I-frame and a number of P-frames, and optionally also of B-frames, form a so called group of pictures (or group of video planes). The I-frames have higher information content than P- and B-frames. Moreover, the loss of an I-frame causes distortion in the decoding of all following frames, whereas the loss of a P-frame only influences the flanking B-frames and the loss of a B-frame doe not affect any other frame. Thus, I frames can be considered more important than P-and B- frames, and B-frames (which however are not transmitted in modern coders) would be allotted the lowest importance.

An example of semantic-aware scheduling algorithm is disclosed in the paper "Semantic-Aware Link Layer Scheduling of MPEG-4 Video Streams in Wireless Systems", presented by J. Klaue et al. at the 3rd Workshop on Applications and Services in Wireless Networks (AWSN), July 2-4, 2003, Bern (Switzerland). The paper proposes an algorithm that manages, depending on the frame type, both the order of transmission of the packets and the maximum delay a packet can suffer before being dropped from the queue. According to the algorithm, packets containing parts of an I-frame are transmitted first, followed by packets containing parts of P- and B-frames, in the order. Moreover, I-frame packets can remain in the queue for the maximum admitted delay, whereas P- and B-frame packets are allotted a reduced permanence time in the queue (3/4 and 1/2 the maximum delay, respectively).

In order the algorithm can be implemented, the access point should have the knowledge of the packet content. Yet the paper does not teach how this is achieved, taking into account that in many systems, including the (E)GPRS systems, transmission over the radio interface takes place after the packets have been fragmented in such a manner that the kind of frame is no longer detectable by the radio resource manager. Moreover, even if according to such prior proposal the less important packets are dropped earlier, a significant number of important packets can still become lost.

According to the invention, there is provided a method and an apparatus for the semantic-aware allocation of radio resources to multimedia streaming services, which allow recognising the importance of the information even after the fragmentation required at the radio link layer, and which significantly reduce the loss of important packets, thereby improving the quality of service.

## Summary of the invention

In a first aspect, the invention provides a method of scheduling transmission of a packet communication relevant to multimedia streaming services over the radio channel of a wireless communication system, wherein data units suitable for transmission over a radio channel of the system are formed, at a gateway between a wired and a wireless part of the system, from packets conveying multimedia data to the system and such data units are queued at an access point to the radio channel, and wherein allocation of radio resources to the communication is based on an information associated to each packet and related to a rank of the data contained in the packet. The method comprises the steps of:

- reading, from each packet arriving at said gateway, said information related to the rank of data contained in the packet;
- marking each data unit formed from said packet with said information;
- checking for the existence of critical conditions on the radio channel preventing the attainment of a given quality-of-service level; and
- in case of detection of said critical conditions, selectively dropping, based on said marking, a number of data units and allotting resources to the remaining data units.

In a second aspect, there is provided an apparatus for implementing the method, comprising:

- snooping and marking means, located at a gateway between a wired and a wireless part of the system and arranged to read from each packet arriving at said gateway an information related to a rank of the data contained in each packet and to mark each data unit formed from a packet with said information; and
- critical condition detecting means and data unit discarding means, located in radio resource managing means at an access point to the radio channel and arranged to detect the existence of critical conditions of the radio channel preventing the attainment of a given quality-of-service level and consequently to selectively drop a number of data units based on said marking and to cause utilization of radio resources for the remaining data units.

Preferably, the invention is applied to convey multimedia streaming services in a GPRS or EDGE/GPRS system, and the multimedia signals are encoded to MPEG-4 standard. In such preferred application, the selective dropping concerns data units containing data from intra-frame coded frames (I-frames) and inter-frame coded and predicted frames (P-frames) of the video component of the multimedia file, and data units containing data from the P-frames are dropped first since they have the lowest importance. Only if the critical condtions cannot be left after all P-frame data units have been dropped, also I- frames can be dropped.

## Brief description of the drawings

A preferred embodiment of the invention, given by way of non-limiting example, will now be disclosed with reference to the accompanying drawings, in which:

- Fig. 1 is a schematic functional representation of a GPRS system embodying the present invention;
- Fig. 2 is a pictorial representation of the packet organisation upon which the invention is based;
- Fig. 3 is a representation of the LLC-PDU format according to the invention;
- Figs. 4 to 6 are flow charts illustrating the method of the invention; and
- Figs. 7 to 10 are graphs illustrating the results of a test performed without or with application of the invention.

## Description of the preferred embodiment

Fig. 1 schematically shows a GPRS system 1 embodying the present invention. System 1 is illustrated by a Gateway GPRS Support Node GGSN, a Serving GPRS Support Node SGSN, a Base Station Controller BSC and a mobile station MS. Also interfaces Gn between GGSN and SGSN, Gb between SGSN and BSC and the radio interface Abis + Um are shown. All such components are conventional and well known to the skilled in the art, and they do not need to be described in detail.

System 1 is connected to an Internet Service Provider ISP, which sends multimedia bit streams belonging to a multimedia streaming service to system 1. Block 2 labelled "Streaming" within ISP represents the codec emitting such bit streams.

Hereinafter it will be assumed, by way of example, that the bit streams include an MPEG-4 encoded video component and an AAC-encoded (AAC = Advanced Audio Codec) audio component. It is also assumed that, in a quite conventional manner, the packets of such bit streams are encapsulated in RTP/UDP (Real-Time Transport Protocol/User Datagram Protocol) packets that in turn are routed from ISP towards system 1 as IP (Internet Protocol) packets. Thus, the packets received at GGSN, as far as the multimedia streaming service is concerned, can be identified as (MPEG-4/AAC)-RTPUDP-IP packets. It is also assumed that the packets of the video flow contain data bytes relating to I- or P-frames (or Video Object Planes, VOPs) only, since B-frames are not used in modern coders. The building of IP packets from the AAC/MPEG-4 packets is schematically shown in the upper three rows of Fig. 2.

The mapping rules for encapsulating the MPEG/AAC packets into RTP/UDP/IP packet not of interest for the invention and are well known to the skilled in the art, so that they do not need to be described here. Thus, the drawing merely indicates the multimedia payload of such packets (AAC-MPEG4) and the headers added by the different transport and routing protocols.

The feature of relevance for the invention is that the headers of the AAC/MPEG frames include a field F (here schematising the whole header) indicating the kind of information flow to which the frame belongs (audio frame or video I- or P-frame) and that such header remains available as long as IP packets can be recognised within system 1 (thus, at the SGSN level or, generally, at the wired/wireless gateway). As explained in the introduction of the specification, the information about the kind of flow is also an information about the importance or rank of the data containing in each packet.

Coming back to Fig. 1, SGSN comprises a unit 3 building LLC (Logical Link Control) frames/LLC-PDUs (LLC-Protocol Data Units) from the (MPEG-4/AAC)-RTP-UDP-IP packets and sending such PDUS to BSC via the Gb interface. In BSC the PDUs are stored within LLC-PDU buffer 4, where they are read under the control of radio resource manager 5 and forwarded over the radio interface (Abis/Um) to a destination mobile station MS. There, the PDUs are stored in MS buffer 6 and then played out at the proper instants.

The above operations are wholly conventional.

According to the present invention, the following enhancements are introduced in order to solve the problems inherent into the provision of a multimedia streaming service over a wireless network and to efficiently guarantee a high quality of service by the use of a semantic-aware scheduling of the packet transmission over the radio interface:

1) the definition of a mechanism which allow the kind of information flow of the streaming session (audio, I-frames, P-frames) to be spread through wireless network elements;
2) the definition of a proper field in the PDUs to distinguish among different MPEG-4 frame types the data are coming from;
3) the definition of a triggering mechanism, able to detect critical conditions on the radio interface and to trigger the activation of the actual semantic-aware scheduling algorithm;
4) the definition of a novel semantic-aware scheduling algorithm.

Aspects 1) and 2) above are implemented by an RTP snooping agent and PDU marker 7 located at the gateway element between wired and wireless network, in particular at SGSN, the last element where the IP packet structure can still be recognised according to the present GPRS standards, as shown in row "IP Packet" in Fig. 2.

Snooping agent and PDU marker 7, which is a first part of the apparatus according to the invention, has been designed as a single software entity, which is to cooperate with LLC-PDU building unit 3. Snooping agent and PDU marker 7 has a twofold task:

- it looks ("snoops") into each incoming IP packet to identify which kind of frame (AAC, I or P) the IP packet encapsulates;
- when the IP packet is converted into one or more PDUs, block 7 includes, into each PDU created by building unit 3, an additional field whose content identifies the kind of frame from which the data contained in the PDU derive. In practice, block 7 copies the content of field F present in the headers of the AAC/MPEG-4 frames into such additional field

The result of the joint operation of building unit 3 and snooping agent and marker 7 is pictorially shown in the bottom row of Fig. 2. There, a number of LLC-PDUs are shown with their headers; the additional field is shown between the payloads LLC-PDU1...LLC-PDUn of the PDUs and the header and is still denoted "F", like in the rows concerning the AAC/MPEG-4 frame and the RTP and IP packets.

Fig. 3 shows the actual structure of an LLC-PDU resulting from the application of the invention. The first three fields of the frame, like in the conventional LLC-PDUs defined by 3GPP (3rd Generation Partnership Project) Technical Specification TS 44-064, are the address field, the control field and the information field, which maintain their standard sizes (or maximum sizes). The new field, named Appl_Flow_Id, is shown by double-line box 30 and is inserted after the information field. The last field is the conventional Frame Check Field

The triggering mechanism and the semantic-aware scheduling algorithm are implemented by a critical condition detector 8 and selective-randomly packet discarding unit 9 that belong to radio resource manager 5 in BSC and form a second part of the apparatus according to the invention.

Block 8 cooperates with buffer 4 to detect when the available bandwidth on the $U_m$ interface and the PDU delay no longer fulfil the application bandwidth/delay requirements (critical conditions). When such conditions occur, before the well known temporary block flow (TBF) reconfiguration procedures take place, block 8 activates discarding unit 9 that tries to preserve the ongoing streaming by partially suppressing the information flows according to their importance. MPEG-4 P-frame flow, as stated before, is considered as less important and thus PDUs containing data from P-frames are dropped first. If dropping all PDUs containing data from P-frames does not allow eliminating the critical condition, then also the I-frame flow can be considered as suppressible. The AAC information flow is never suppressed, as the bandwidth required for audio streaming flow is assumed as always available on the radio interface. Thanks to the additional field App_Flow_ID in the PDUs stored within buffer 4, according to the invention the semantic-aware algorithm can be implemented directly on the data units forwarded over the radio interface.

Considering in more detail critical condition detection, three alternative methods are conventionally used:

- comparing the available bandwidth on the radio interface with the bandwidth that has to be guaranteed;
- measuring the level of PDU buffer 4, i.e. the amount of data contained therein;
- verifying PDU transfer delay statistics.

A new approach is adopted according to the invention, which combines information got by all three methods listed above, instead of exploiting a single method. More particularly, when the available bandwidth $B_{Um}$ on the Um interface falls below bandwidth $B_{Um}^{G}$ that had been negotiated as guaranteed, i.e. when condition $B_{Um} \leq B_{Um}^{G}$ is verified, a check on the buffer level is performed. Indeed, the reduced bandwidth availability does not imply always the existence of a critical condition, as the instant characteristics of the multimedia flow could be such that the whole guaranteed bandwidth is not required.

The streaming session Quality-of-Service (QoS) profile foresees that the PDU transfer delay parameter LL_TD is respected for a LL_TD% percentage of PDUs. Defining as LL_PDU_Size the size [in bits] of a PDU, the number $N_{TD_R}$ of PDUs stored within buffer 4 for which the transfer delay constraints will be guaranteed is:

$$N_{TD_R} = \frac{B_{Um} \cdot LL_TD}{LL_PDU_Size} \qquad (1)$$

If N_LL_PDU is the number of PDUs stored in buffer 4, the critical condition actually exists if

$$N_LL_PDU > N_{TD_R} \cdot \left(1 + \frac{100 - LL_TD\%}{100}\right) \qquad (2)$$

Condition (2) is actually a combination of the results of the three methods mentioned above, and its occurrence starts the operation of discarding unit 9.

Figs. 4 to 6 show flow charts of the method of the invention.

Fig. 4 is the general processing procedure. When a multimedia streaming session is started (step 40), a packet flow is transmitted to the system (step 41). At the gateway between the wired and the wireless part of system 1 (i.e. at SGSN, Fig. 1), the kind of multimedia information flow (audio frames, I-frames, P-frames) in the packet payload is detected and the relevant information is copied into the additional field of each PDU being formed (snooping & marking step 42). At the radio resource manager, the existence of critical conditions on the radio interface is detected (step 43) depending on the available bandwidth and the status of buffer 4. If the conditions are not critical, no action is taken. If the conditions are critical, the selective-randomly discarding algorithm is started (step 44).

Fig. 5 shows in more detail the snooping and marking process. When a packet is received at SGSN (step 50), it is looked whether the packet relates to the multimedia streaming service. In practice, with the assumptions made for the transmission protocols between ISP and system 1, it is checked whether the packet is an RTP packet (step 51). In the affirmative, the snooping and marking unit 7 reads the frame type (step 52), i.e. it reads field F (fig. 2). Then, the packet content is included into one or more PDUs (step 53) and the information read from field F of the RTP packet is written into additional field Appl_Flow_Id of all PDUs built from said packet (marking step 54). The PDUs marked in this manner are then forwarded to BSC (step 55). If the check at step 51 had a negative result, the process is wholly conventional and passes directly to the PDU building (step 56) and then to the PDU forwarding to BSC, bypassing the snooping and marking steps.

Fig. 6 shows the selective discarding algorithm.

The triggering event (step 60) is the detection of a critical condition, i.e. the occurrence of the condition expressed by relation (2).

Before actually starting the algorithm, a discarding percentage Dis% is estimated (step 61). Dis% is the percentage of packets to be discarded to leave the critical conditions and it is given by:

$$Dis\% = \Delta \cdot \frac{N_LL_PDU - N_{TD_R}}{N_LL_PDU} \cdot 100 \qquad (3)$$

Δ is a tuning parameter (Δ > 1), which takes into account the relative proportions of I-frames and P-frames in the video flow and which is introduced to guarantee that only PDUs corresponding to P-frames can be discarded, with the aim of removing critical condition, as long as they are present in buffer 4.

Once DIS% has been calculated, all PDUs stored in buffer 4 are sequentially considered (Buffer scanning step 62). For each PDU, App_Flow_ID field is checked. For PDUs belonging to AAC and MPEG-4 I-frame flows no action is taken. For each PDU belonging to an MPEG-4 P-frame a random choice is made on whether the PDU is to be dropped or kept in the buffer. Each PDU is dropped with probability Dis%. Once all PDUs have been inspected and the proper number of P-frames have been dropped (step 63), N_LL_PDU is updated and the buffer level is again checked (step 64).

If condition (2) is no longer met (the buffer level is found "good" at step 64), the algorithm is deactivated (step 65). If condition (2) is still met (the buffer level if found "too high" at step 64) and PDUs belonging to the MPEG-4 P-frame info flow are still present in buffer 4, Dis% is recalculated and the above steps are re-executed.

In most practical situation, the desired QoS can be maintained by discarding only PDUs deriving from P-frames. However, it is possible to apply the selective-randomly discarding algorithm also to PDUs with data from I-frames, when PDUs relevant to the P-frame flow are no longer present in buffer 4 and the buffer level is still too high. Also in this case (not shown for sake of simplicity of the drawing) the operations start with the calculation of the discarding percentage and go on as described above.

Fig. 7 to 10 show the results of a simulation test performed to evaluate the improvements attainable by the use of the invention with respect to the case in which no semantic-aware scheduling is performed. The test was performed by using real C/I versus time trace of the radio channel and assuming that two time slots were exclusively dedicated to the TBF (Temporary Block Flow) carrying the streaming sessions. Two different video streams have been considered, with an average bit rate of 49 kbps. The first one is a low motion video stream whilst the second is a high motion one. The average available bandwidth considered in the test should allow supporting the streaming. However, due to the variability of radio channel and the variability of the bandwidth required by the application, the stream could not be played back at mobile station side without interruptions and rebuffering.

Figs. 7 and 8 show the system behaviour without and respectively with application of the invention. The graphs plot the RTP packets transmission over the wireless network, the reception at the mobile station, and the play out (the case of high motion is only considered in these graphs).

Without application of the invention, as shown in Fig. 7, two stall and rebuffering events take place at two instants identified in the drawing by vertical arrows.

On the contrary, with the introduction of the invention, the video clip can be played out entirely without any interruptions, as shown in Fig. 8. When applying the invention, P-frames only have been discarded, and the P-frames being discarded are plotted with a circle on the x-axis in Fig. 8. A 16% P-frame loss has been computed, which should lead to a temporary and negligible worsening in the quality of the video stream.

Figs. 9 and 10 point out the improvement in terms of LLC-PDU delay which can be achieved for the two streams. Without use of the invention (Fig. 9), the 90% percentile of the LLC-PDU transfer delay ranges from 7 sec to 10 sec. With the introduction of the invention (Fig. 10) such percentile is of about 2.3 sec. The skilled in the art will readily appreciate the improvement, in view of the fact that multimedia transmissions are, to a certain degree, loss-tolerant but are very delay-sensitive.

Thus, the invention significantly improves the end-to-end QoS for streaming services over wireless links. Moreover, a more effective exploitation of the available radio resource is achieved. Both these aspects are of extreme interest for operators who need to launch multimedia streaming application over personal communication systems.

It is important to point out that this approach involves only the radio access networks and is transparent to media servers and user handset's applications.

The main benefit from the user's perspective lies in the capability of accessing "live" streaming without interruption and rebuffering even in case of worsening of the radio link conditions.

It is evident that the above description has been given by way of non-limiting example and that changes and modification can be made by the skilled in the art without departing from the scope of the invention. Thus, even if the invention has been described with particular reference to the transmission of AAC/MPEG-4 multimedia signals in and EDGE/GPRS system, the invention can be applied in any wireless or mobile communication systems supporting multimedia streaming services and to any multimedia transmission protocol allowing a detection of the kind, and hence of the rank, of the data conveyed.

## Claims

**1.** A method of scheduling transmission of a packet communication relevant to multimedia streaming services over a radio channel of a wireless communication system (1), wherein data units suitable for transmission over said radio channel are formed at a gateway (SGSN) between a wired and a wireless part of the system (1) from packets conveying multimedia data to the system (1) and such data units are queued at an access point (BSC) to the radio channel, and wherein allocation of radio resources to the communication is based on an information (F) associated to each packet and related to a rank of data contained in the packet, **characterised in that** the method comprises the steps of:

- reading, from each packet arriving at said gateway (SGSN), said information (F) related to the rank of the data contained in the packet;
- marking each data unit formed from said packet with said information (F); and
- checking for the existence of critical conditions on the radio channel preventing the attainment of a given quality-of-service level; and
- in case of detection of said critical conditions, selectively dropping, based on said marking, a number of data units and allotting resources to the remaining data units.

**2.** The method as claimed in claim 1, **characterised in that** said data units are the logical-link protocol data units of an E(GPRS) communication systems, and said marking includes adding to each protocol data unit a field (30) identifying the kind of multimedia information flow from which the data unit has been formed.

**3.** The method as claimed in claim 1 or 2, **characterised in that** said critical conditions are detected by a joint evaluation of an available bandwidth on the radio channel, an amount of data units queued at said access point (BSC) to the radio channel, and a transfer delay statistics of the data units.

**4.** The method as claimed in claim 3, **characterised in that** said evaluation indicates the existence of critical conditions upon the simultaneous occurrence of:

- an available bandwidth lower than or equal to a guaranteed bandwidth for the service, and
- a number of queued data units exceeding a threshold depending on said guaranteed bandwidth, a data unit size, a transfer delay parameter set by quality-of-service requirements of the service, and a percentage of data units for which said delay parameter is to be met according to the quality-of-service requirements of the service.

**5.** The method as claimed in any preceding claim, **characterised in that** said selective dropping and allotting step comprises:

a) computing, for queued data units obtained from packets to the multimedia streaming service, a discarding percentage depending on the number of data units queued at said access point (BSC) and on said percentage of data units for which said delay parameter is to be met; and
b) dropping a corresponding number of data units for which said marking indicated a data content of a lowermost rank.

**6.** The method as claimed in claim 5, **characterised in that** said discarding percentage is computed taking into account the relative proportions, in a packet sequence, of packets containing data of different ranks.

**7.** The method as claimed in claim 5 or 6, **characterised in that**, after dropping said number of data units of the lowermost rank, the existence of critical conditions is again checked, and, in case the critical conditions have been left, radio resources are allotted to the remaining data units, whereas, if the critical conditions still exist, steps a) and b) are repeated.

**8.** The method as claimed in any of claims 5 to 7, **characterised in that** if the critical conditions still exist after dropping of all data units of a given rank, steps a) and b) are performed and if necessary repeated for data units of an immediately higher rank.

**9.** The method as claimed in any of claims 5 to 8, **characterised in that** the data units to be dropped at a given rank are chosen randomly.

**10.** The method as claimed in claim 5 to 9, **characterised in that** the data units to be dropped are data units formed from packets containing video data.

**11.** The method as claimed in any of claims 5 to 10, **characterised in that** said data of lowermost rank are data of inter-frame encoded pictures predicted from a preceding intra-frame encoded picture.

**12.** The method as claimed in claim 10 or 11, **characterised in that** said video data are data encoded according to the MPEG-4 standard.

**13.** An apparatus for scheduling transmission of a packet communication relevant to multimedia streaming services over the radio channel of a wireless communication system (1), wherein a gateway (SGSN) between a wired and a wireless part of the system (1) is arranged to receive, from a multimedia streaming service provider (ISP), packets including an information (F) related to a rank of multimedia data contained in each packet, and to form from said packets data units suitable for transmission over said radio channel, and radio resource managing means (5) at an access point to the radio channel (BSC) are arranged to queue said data units in a buffer (4) and to perform a scheduling of the transmission based on the rank information (F), **characterised in that** said apparatus (7, 8, 9) comprises:

- snooping and marking means (7), located at said gateway (SGSN) and arranged to read said information from each packet arriving at said gateway (SGSN) and to mark each data unit formed from a packet with said information (F) related to a rank of the data contained in each packet; and
- critical condition detecting means (8) and data unit discarding means (9), located in said control units (BSC, 5) and arranged to cooperate with said buffer (4) and with each other to detect the existence of critical conditions of the radio channel preventing the attainment of a given quality-of-service level and consequently to selectively drop a number of data units from the buffer (4) based on said marking and to cause allocation of radio resources to the remaining data units.

**14.** The apparatus as claimed in claim 13, **characterised in that** said data units are the logical link control / protocol data units of a GPRS/EGPRS communication system, and said snooping and marking means (7) is arranged to add to each protocol data unit a field (30) identifying the kind of multimedia information flow from which the content of the data unit has been formed.

**15.** The apparatus as claimed in claim 13 or 14, **characterised in that** said critical condition detecting means (8) is arranged to perform an evaluation of an available bandwidth on the radio channel, of an amount of data units relevant to said streaming service queued in said buffer (4), and of a transfer delay statistics of the data units, and to signal the existence of critical conditions when said evaluation indicates that:

- the available bandwidth is lower than or equal to a guaranteed bandwidth for the service, and
- the number of queued data units relevant to said streaming service exceeds a threshold depending on the guaranteed bandwidth, the data unit size, a transfer delay parameter set by quality-of-service requirements of the service, and a percentage of data units for which said delay parameter is to be met according to the quality-of-service requirements of the service.

**16.** The apparatus as claimed in any of claims 13 to 15, **characterised in that** said data unit discarding means (9) is arranged to:

- compute, for said queued data units relevant to said streaming service, a discarding percentage depending on a level of the queue in said buffer (4) and on said percentage of data units for which said delay parameter is to be met; and
- drop a corresponding number of data units whose marking indicates a data content of a lowermost rank.

**17.** The apparatus as claimed in claim 16, **characterised in that** said data unit discarding means (9) are arranged to compute said discarding percentage taking into account the relative proportions, in a packet sequence, of packets containing data of different ranks.

**18.** The apparatus as claimed in claim 16 or 17, **characterised in that** said data unit discarding means (9) are arranged, after having dropped data units of the lowermost rank, to check again the existence of critical conditions and to cause allocation of radio resources to the remaining data units, in case the critical conditions have been left, or to repeat the discarding percentage computing and the data unit dropping, in case the critical conditions still exist.

**19.** The apparatus as claimed in any of claims 16 to 18, **characterised in that**, if the critical conditions still exist after all data units of a given rank have been dropped, said data unit discarding means (9) are arranged to perform, and if necessary to repeat, the discarding percentage computing and the data unit dropping for data units of an immediately higher rank.

**20.** The apparatus as claimed in any of claims 16 to 19, **characterised in that** said data unit discarding means (9) are arranged to randomly chosen the data units of a given rank to be dropped.

**21.** The apparatus as claimed in any of claim 16 to 20, **characterised in that** said data unit discarding means (9) are arranged to operate on data units containing video data.

**22.** The apparatus as claimed in any of claims 16 to 21, **characterised in that** said data of lowermost rank are data of inter-frame coded pictures predicted from a preceding intra-frame coded picture.

**23.** The method as claimed in claim 21 or 22, **characterised in that** said video data are data encoded according to the MPEG-4 standard.

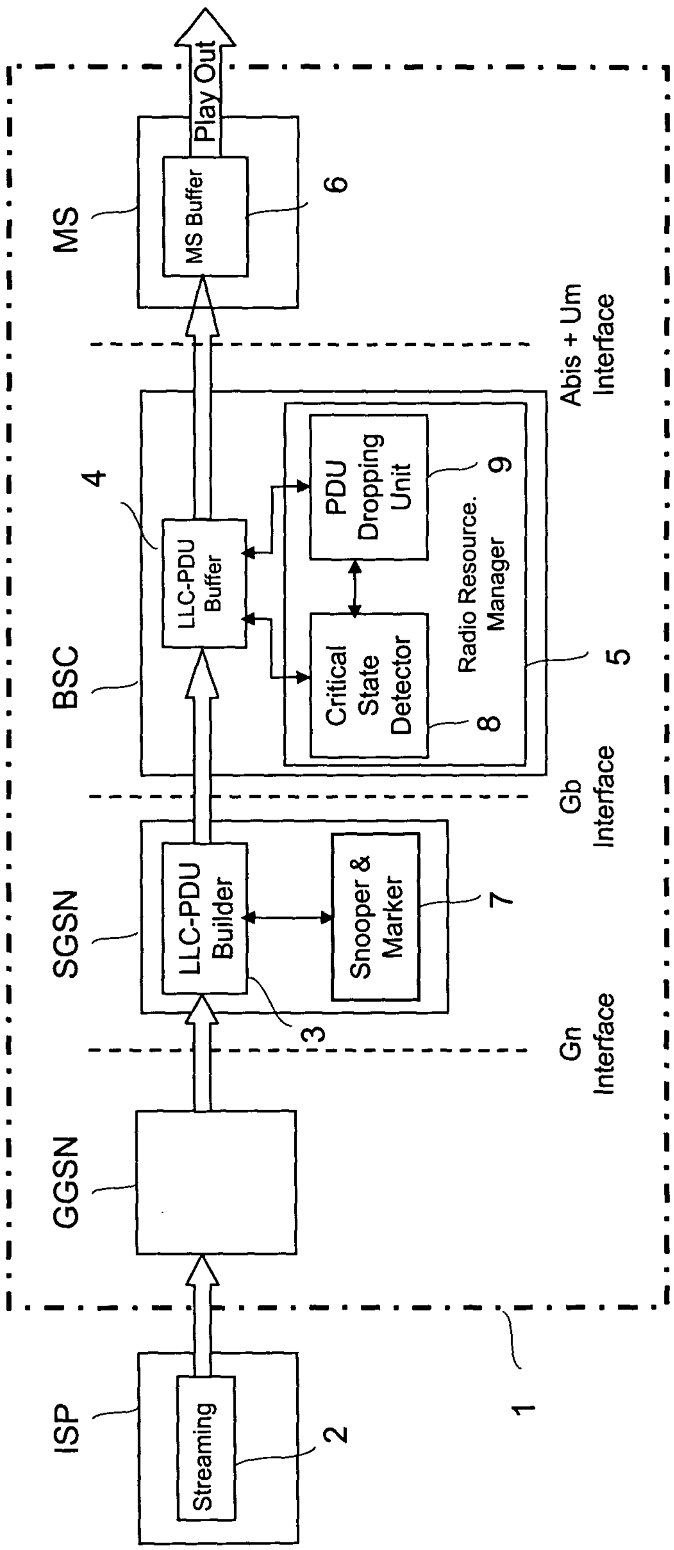
ISP
Streaming
2
1
GGSN
Gn
Interface
SGSN
LLC-PDU
Builder
3
Snooper &
Marker
7
Gb
Interface
BSC
LLC-PDU
Buffer
4
Critical
State
Detector
8
PDU
Dropping
Unit
9
Radio Resource.
Manager
5
Abis + Um
Interface
MS
MS Buffer
6
Play Out

Fig. 1

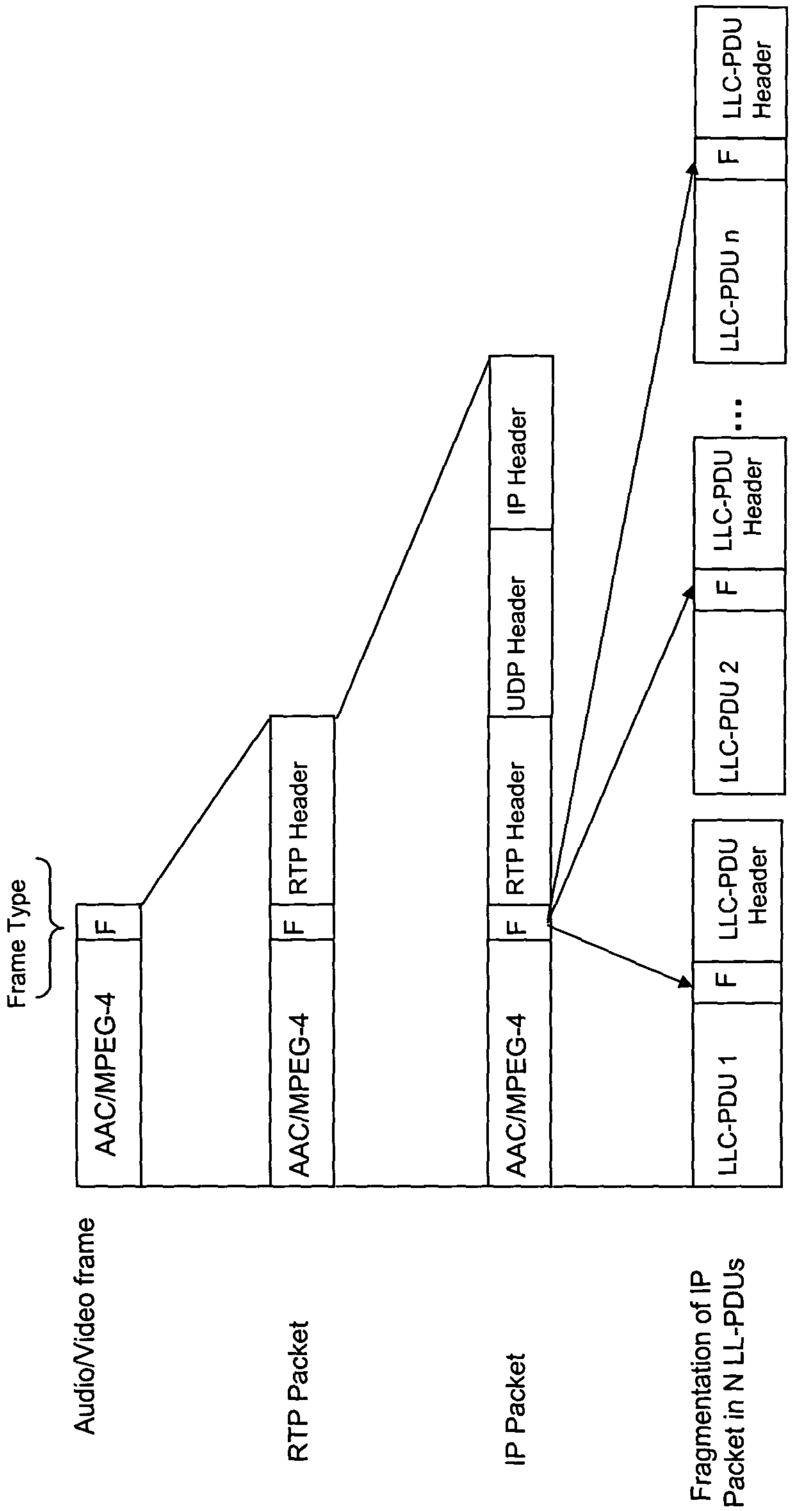
Audio/Video frame
RTP Packet
IP Packet
Fragmentation of IP Packet in N LL-PDUs
Frame Type
AAC/MPEG-4
F
RTP Header
UDP Header
IP Header
LLC-PDU 1
LLC-PDU Header
LLC-PDU 2
LLC-PDU n
...

Fig. 2

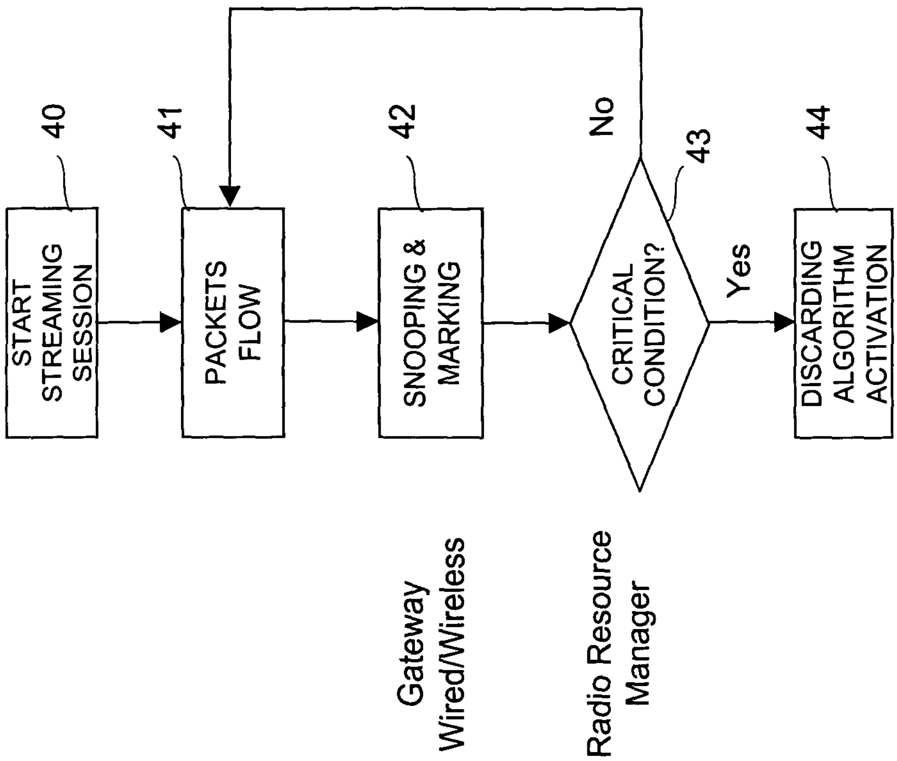
START STREAMING SESSION
40
PACKETS FLOW
41
SNOOPING & MARKING
42
CRITICAL CONDITION?
43
No
Yes
DISCARDING ALGORITHM ACTIVATION
44
Gateway Wired/Wireless
Radio Resource Manager

Fig. 4

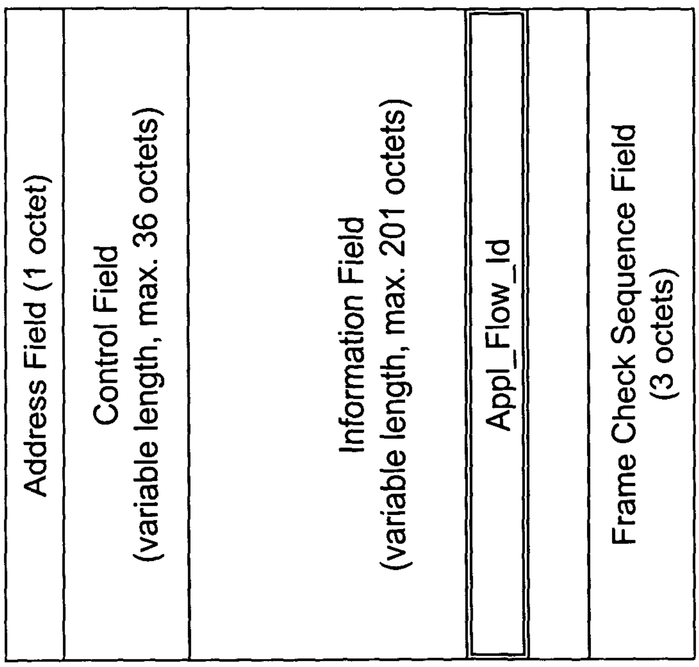
Address Field (1 octet)
Control Field (variable length, max. 36 octets)
Information Field (variable length, max. 201 octets)
Appl_Flow_Id
Frame Check Sequence Field (3 octets)

Fig. 3

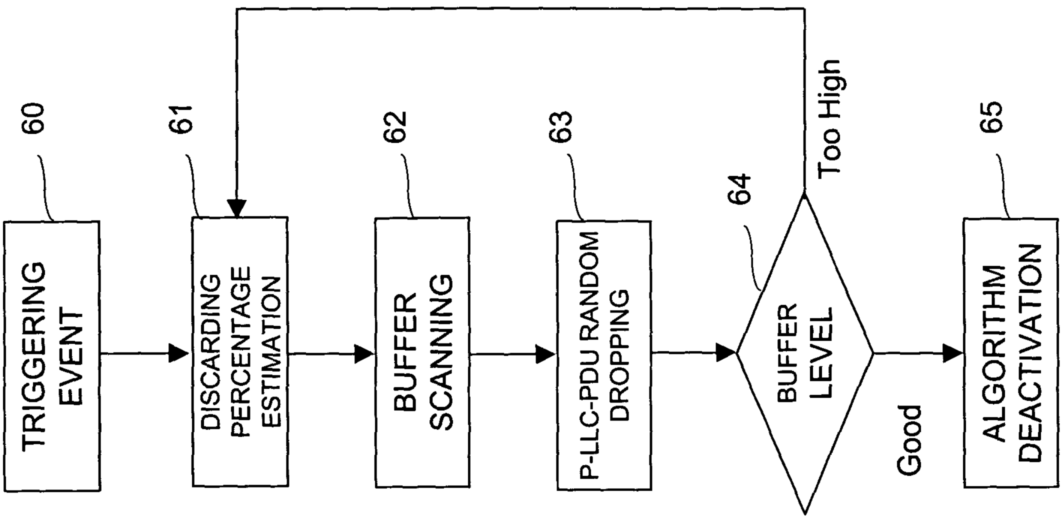
TRIGGERING EVENT
60
DISCARDING PERCENTAGE ESTIMATION
61
BUFFER SCANNING
62
P-LLC-PDU RANDOM DROPPING
63
BUFFER LEVEL
64
Too High
Good
ALGORITHM DEACTIVATION
65

Fig. 6

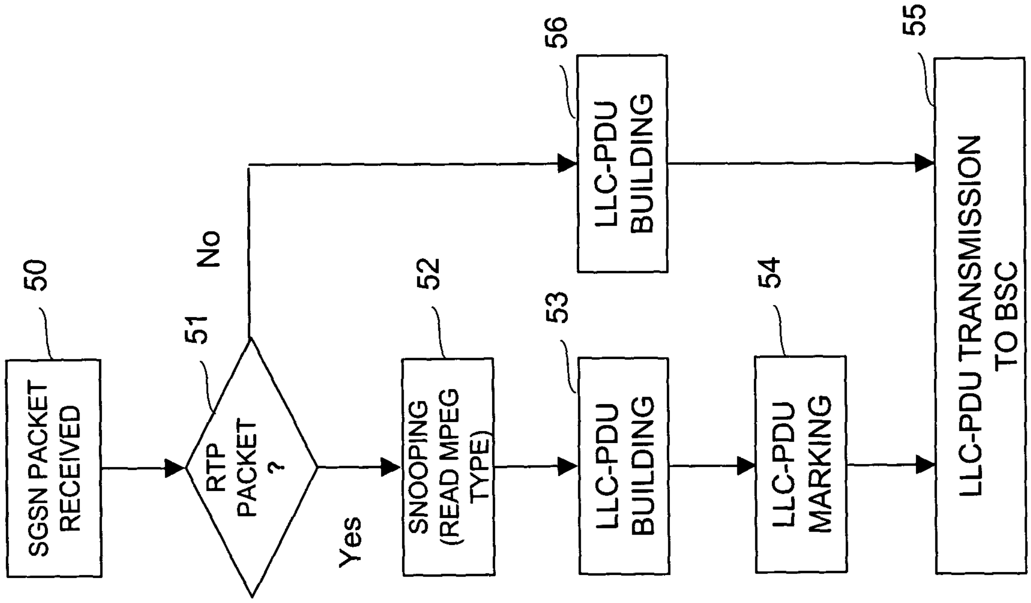
SGSN PACKET RECEIVED
50
RTP PACKET ?
51
Yes
No
SNOOPING (READ MPEG TYPE)
52
LLC-PDU BUILDING
53
LLC-PDU MARKING
54
LLC-PDU BUILDING
56
LLC-PDU TRANSMISSION TO BSC
55

Fig. 5

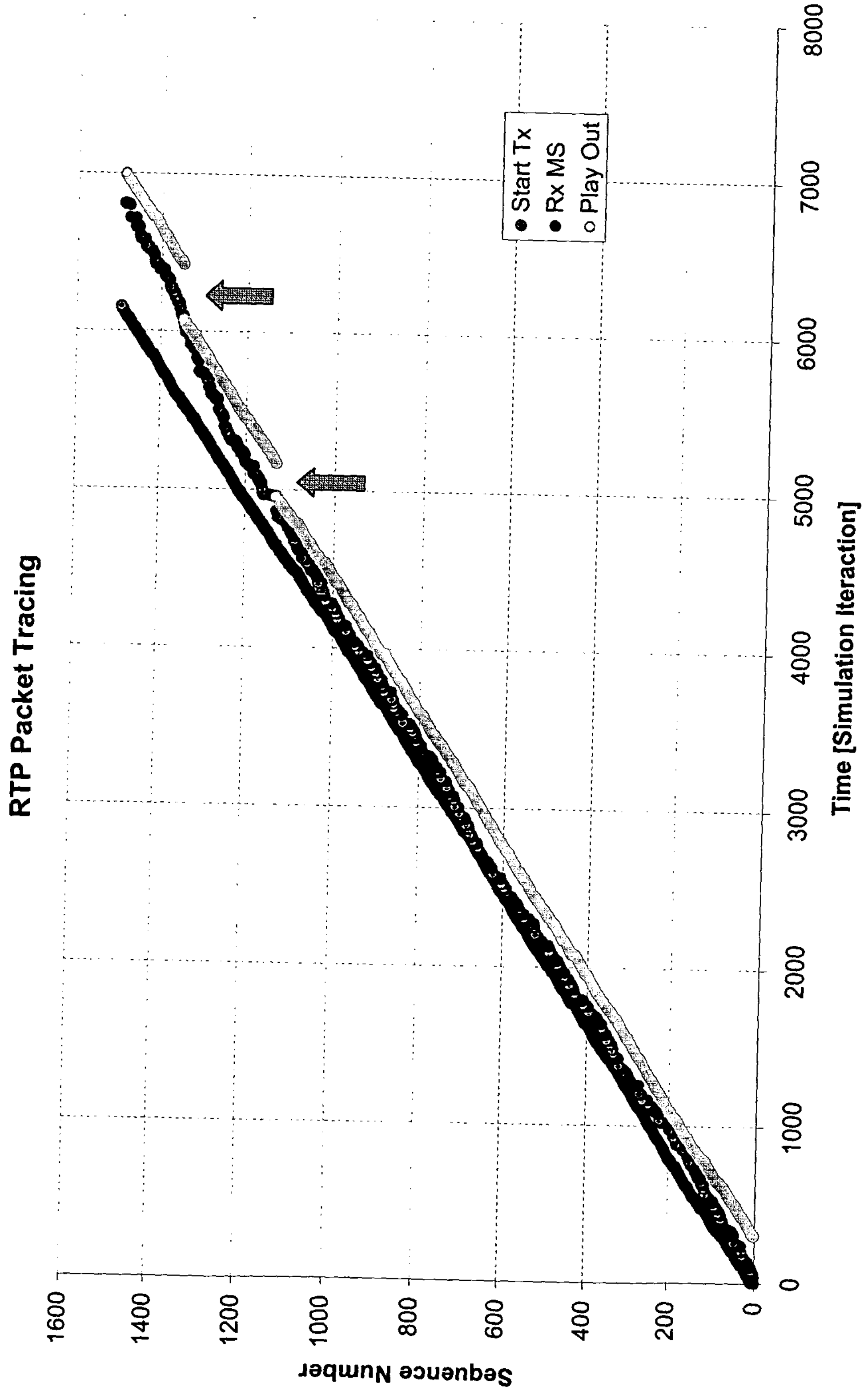
RTP Packet Tracing
Sequence Number
Time [Simulation Iteraction]
Start Tx
Rx MS
Play Out
0
200
400
600
800
1000
1200
1400
1600
0
1000
2000
3000
4000
5000
6000
7000
8000

Fig. 7

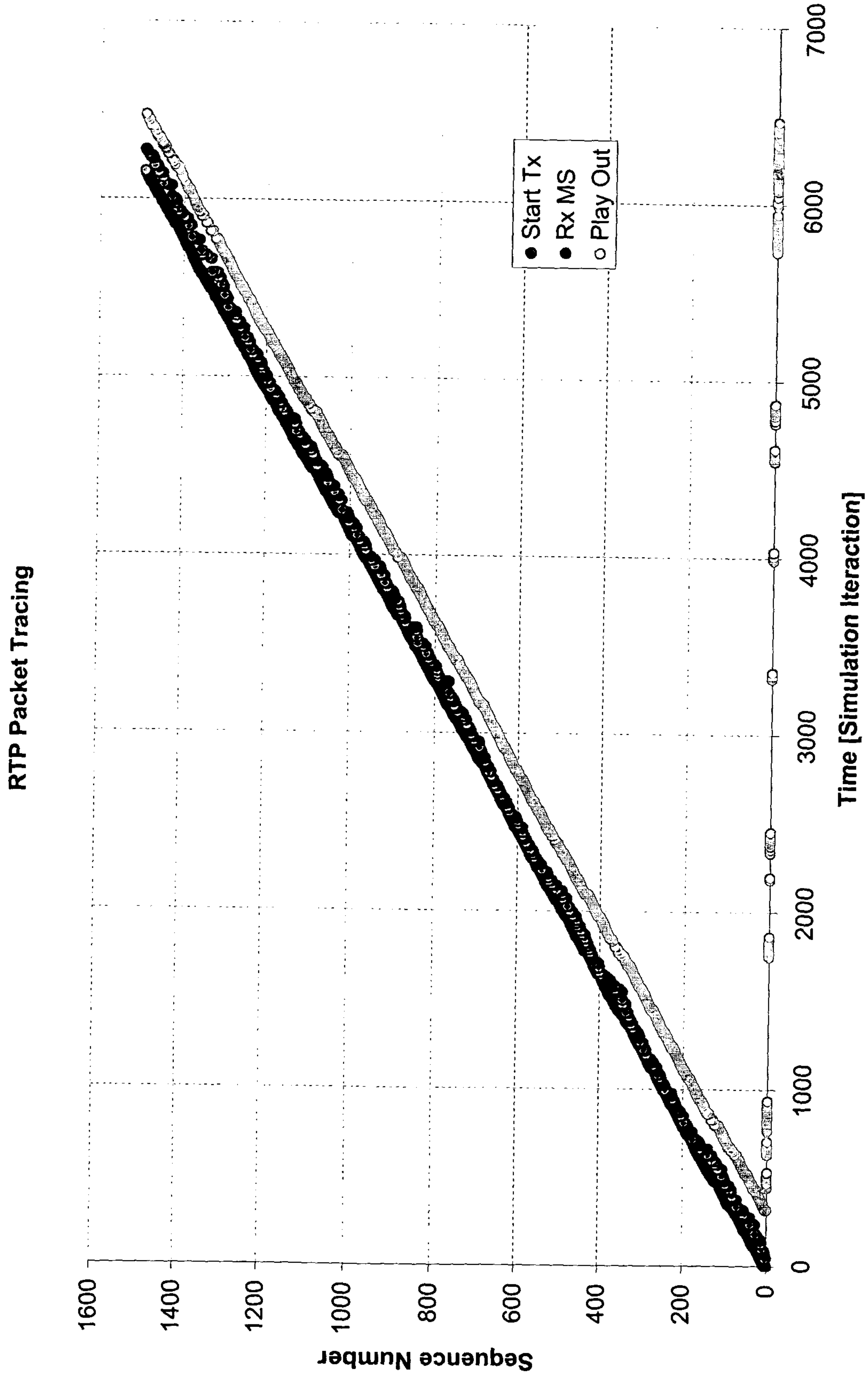
RTP Packet Tracing
Sequence Number
1600
1400
1200
1000
800
600
400
200
0
0
1000
2000
3000
4000
5000
6000
7000
Time [Simulation Iteraction]
Start Tx
Rx MS
Play Out

Fig. 8

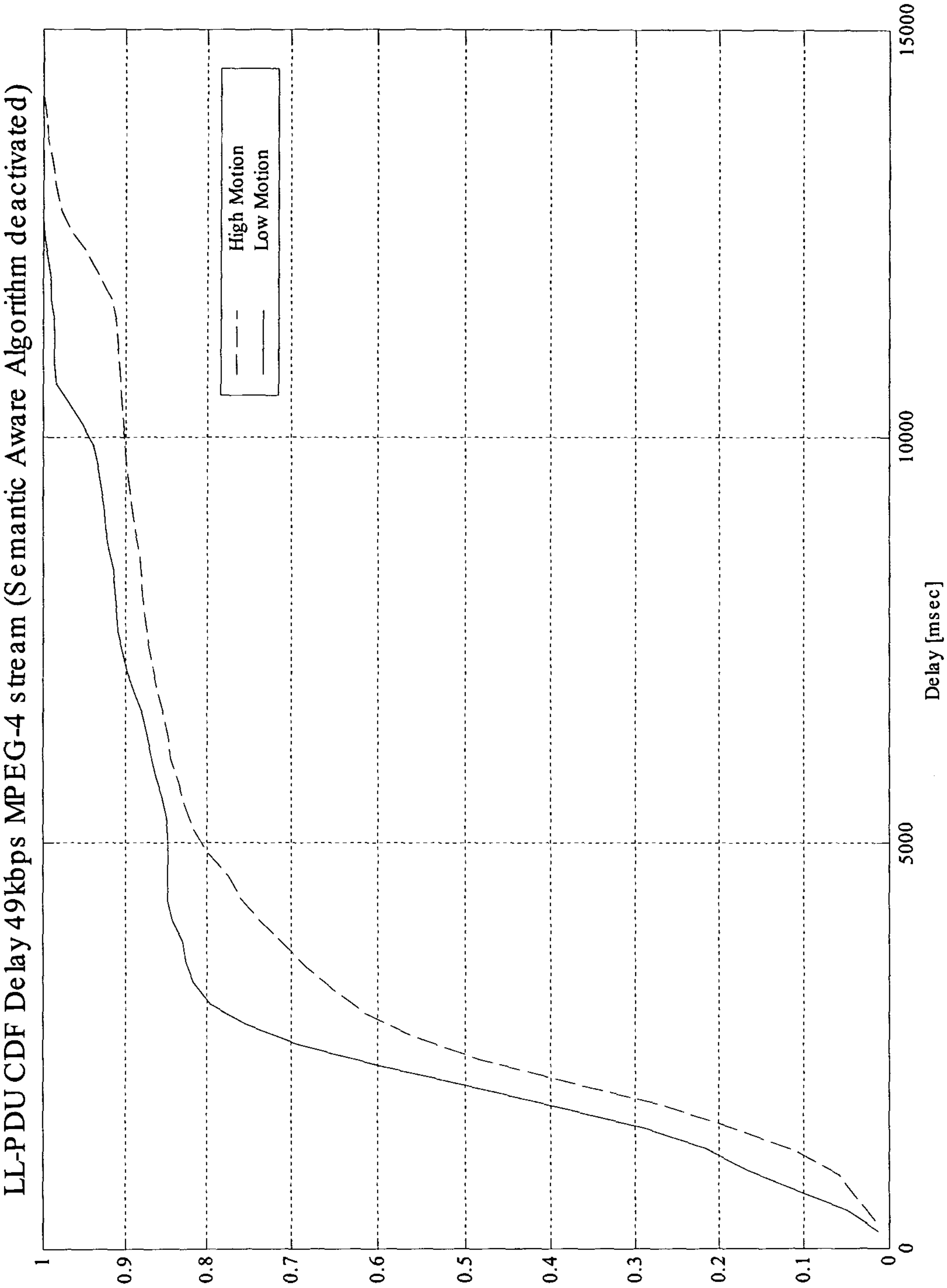
LL-PDU CDF Delay 49kbps MPEG-4 stream (Semantic Aware Algorithm deactivated)
High Motion
Low Motion
Delay [msec]
0
5000
10000
15000
0
0.1
0.2
0.3
0.4
0.5
0.6
0.7
0.8
0.9
1

**Fig. 9**

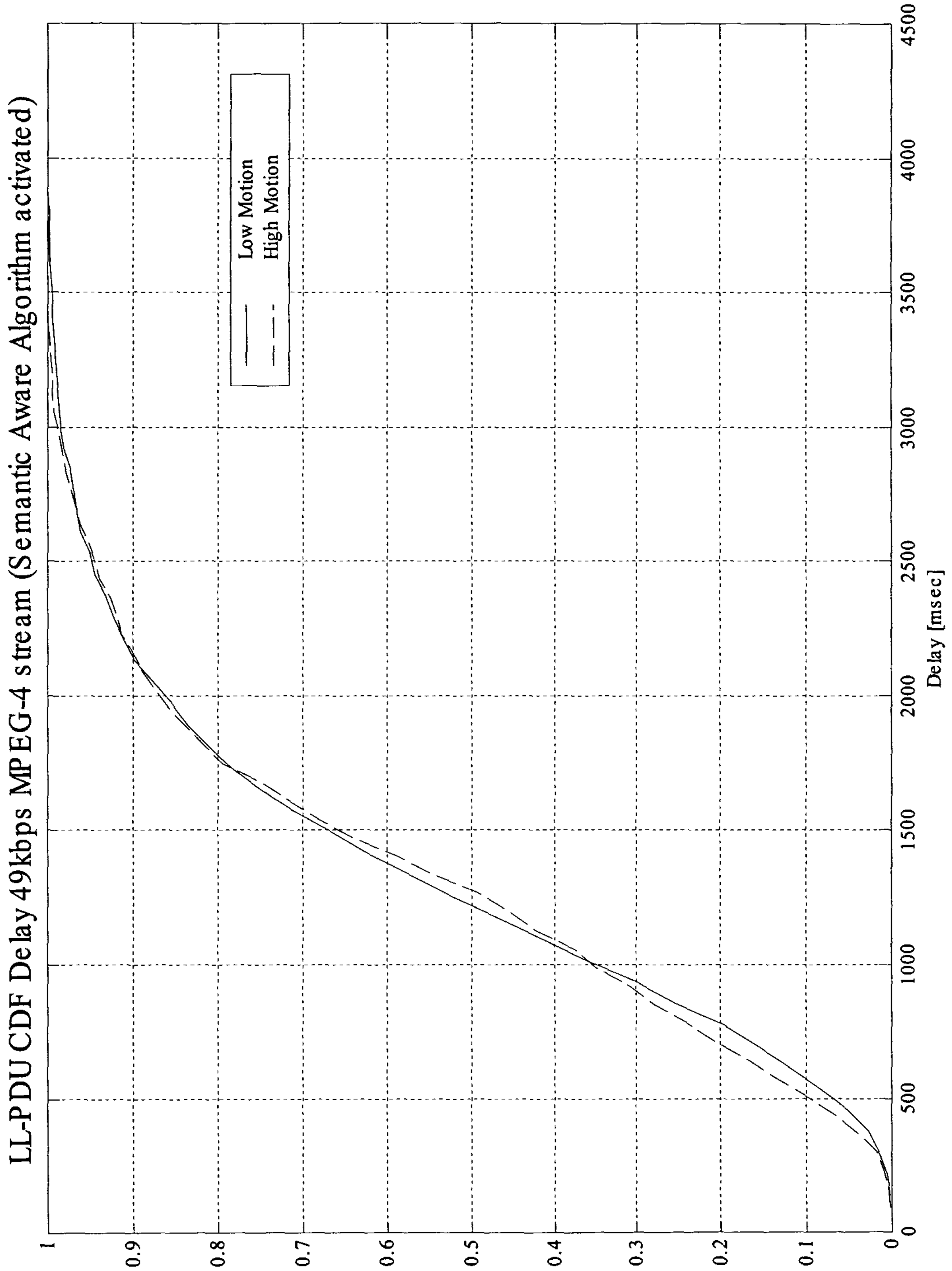
LL-PDU CDF Delay 49kbps MPEG-4 stream (Semantic Aware Algorithm activated)
Low Motion
High Motion
Delay [msec]
0
500
1000
1500
2000
2500
3000
3500
4000
4500
0
0.1
0.2
0.3
0.4
0.5
0.6
0.7
0.8
0.9
1

Fig. 10

European Patent Office

# EUROPEAN SEARCH REPORT

Application Number
EP 04 42 5546

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br><br><br>Y | US 6 728 208 B1 (PUUSKARI MIKKO) 27 April 2004 (2004-04-27)<br>* abstract *<br>* column 1, line 7 - column 2, line 33 *<br>* column 3, line 16 - column 5, line 67 *<br>* column 8, line 57 - column 9, line 17 *<br>* column 9, line 52 - column 10, line 60 *<br>* column 11, line 4 - line 37 *<br>* column 12, line 37 - column 14, line 10 *<br>* column 14, line 44 - column 15, line 51 *<br>* column 16, line 10 - line 15 *<br>----- | 1,2, 10-14, 21-23<br>3-9, 15-20 | H04L12/56 |
| Y<br><br>A | WO 01/63858 A (MITEL SEMICONDUCTOR V N INC) 30 August 2001 (2001-08-30)<br>* page 1, line 20 - page 2, line 4 *<br>* page 3, line 3 - line 10 *<br>* page 5, line 6 - page 7, line 19 *<br>* page 8, line 3 - page 9, line 23 *<br>* page 11, line 11 - line 21 *<br>* page 12, line 25 - line 29 *<br>* page 14, line 12 - line 13 *<br>----- | 3-9, 15-20<br>1,2,13, 14 | TECHNICAL FIELDS SEARCHED (Int.Cl.7)<br>H04L |
| Y | TAO TIAN ET AL: "Priority dropping in network transmission of scalable video" IEEE,<br>vol. 3, 10 September 2000 (2000-09-10), pages 400-403, XP010529488<br>* abstract *<br>* page 400, left-hand column, line 1 - page 401, left-hand column, line 19 *<br>* page 403, left-hand column, line 1 - right-hand column, line 21 *<br>-----<br>-/-- | 1-3,5, 7-14 | |

The present search report has been drawn up for all claims

| Place of search | Date of completion of the search | Examiner |
|---|---|---|
| Munich | 21 January 2005 | Biyee, N |

2

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

European Patent Office

**EUROPEAN SEARCH REPORT**

Application Number
EP 04 42 5546

**DOCUMENTS CONSIDERED TO BE RELEVANT**

| Category | Citation of document with indication, where appropriate, of relevant passages | Relevant to claim | CLASSIFICATION OF THE APPLICATION (Int.Cl.7) |
|---|---|---|---|
| Y | WO 99/05828 A (ERICSSON TELEFON AB L M) 4 February 1999 (1999-02-04)<br>* abstract *<br>* page 5, line 16 - page 8, line 16 *<br>* page 21, line 6 - page 22, line 10 *<br>* page 22, line 24 - page 23, line 11 *<br>* claims 1-3,28 *<br>----- | 1-3,5, 7-14 | |
| A,D | JIRKA KLAUE,JAMES GROSS,HOLGER KARL,ADAM WOLISZ: "Semantic-aware Link Layer scheduling of MPEG-4 Video Streams in Wireless Systems"<br>TELECOMMUNICATION NETWORKS GROUP, [Online] July 2003 (2003-07), pages 1-9, XP002314080<br>Retrieved from the Internet:<br>URL:http://www.tkn.tu-berlin.de/publications/papers/aswn03.pdf><br>[retrieved on 2005-01-14]<br>* abstract *<br>Page 1, Line 25 "A different approach..." - page 2, line 38<br>* page 3, line 17 - page 4, line 31 *<br>* page 7, line 20 - page 8, line 16 *<br>----- | 1-23 | TECHNICAL FIELDS SEARCHED (Int.Cl.7) |
| A | ZHAO L ET AL: "MPEG-4 FGS VIDEO STREAMING WITH CONSTANT-QUALITY RATE ADAPTATION, PRIORITIZED PACKETIZATION AND DIFFERENTIATED FORWARDING"<br>PROCEEDINGS OF THE SPIE, SPIE, BELLINGHAM, VA, US,<br>vol. 4520, 21 August 2001 (2001-08-21), pages 84-95, XP008006103<br>ISSN: 0277-786X<br>* abstract *<br>* page 84, line 14 - page 87, line 14 *<br>* page 89, line 6 - line 40 *<br>* page 90, line 20 - line 30 *<br>* page 92, line 1 - line 6 *<br>----- | 1-23 | |

The present search report has been drawn up for all claims

| Place of search | Date of completion of the search | Examiner |
|---|---|---|
| Munich | 21 January 2005 | Biyee, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

2

EPO FORM 1503 03.82 (P04C01)

## ANNEX TO THE EUROPEAN SEARCH REPORT ON EUROPEAN PATENT APPLICATION NO. EP 04 42 5546

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2005

| Patent document cited in search report | Publication date | Patent family member(s) | Publication date |
|---|---|---|---|
| US 6728208 B1 | 27-04-2004 | FI 980617 A | 20-09-1999 |
| | | AU 2838999 A | 11-10-1999 |
| | | EP 1064800 A1 | 03-01-2001 |
| | | WO 9948310 A1 | 23-09-1999 |
| WO 0163858 A | 30-08-2001 | AU 3704301 A | 03-09-2001 |
| | | CN 1416633 T | 07-05-2003 |
| | | EP 1258115 A1 | 20-11-2002 |
| | | TW 490964 B | 11-06-2002 |
| | | WO 0163858 A1 | 30-08-2001 |
| | | US 2001051992 A1 | 13-12-2001 |
| WO 9905828 A | 04-02-1999 | AU 739717 B2 | 18-10-2001 |
| | | AU 8369898 A | 16-02-1999 |
| | | BR 9810796 A | 25-07-2000 |
| | | CA 2297125 A1 | 04-02-1999 |
| | | CN 1271488 T | 25-10-2000 |
| | | EP 0997018 A1 | 03-05-2000 |
| | | NZ 502339 A | 30-11-2001 |
| | | WO 9905828 A1 | 04-02-1999 |

EPO FORM P0459

For more details about this annex : see Official Journal of the European Patent Office, No. 12/82